# EUROPEAN PATENT SPECIFICATION

(11) **EP 3 839 371 B1**
(45) Date of publication and mention of the grant of the patent: **03.05.2023**
(21) Application number: 19383119.5
(22) Date of filing: 16.12.2019
(51) Int. Cl.: F24S 30/425, F24S 40/80

(54) **SOLAR TRACKER**
SONNENNACHFÜHRER
SUIVEUR SOLAIRE

(43) Date of publication of application: 23.06.2021
(73) Proprietor: Soltec Innovations, S.L., 30500 Molina de Segura (ES)
(72) Inventor: Carpio Obre, Francisco Javier, 46870 Ontinyent (ES); Maldonado Nicolás, Juan José, 30167 La Raya (ES)
(74) Representative: Isern Patentes y Marcas S.L.

(56) References cited:
- WO-A1-2017/210265
- US-A1- 2017 353 146
- US-B2- 9 581 678

## Description

### Technical field of the invention

The present invention belongs to the technical field of solar energy, in particular to solar trackers, for providing rotation to a module of solar panels for sun-tracking. In particular, the object of the invention relates to such a solar tracker.

### Background of the invention (state of the art)

Wind is a main factor affecting the integrity of solar trackers, because it may produce collapsing of the solar trackers. Firstly, dynamic action of wind on the modules of solar panels (for example, photovoltaic panels) produces a torsion moment which mainly affects the tracker shaft and the reducer gearbox of the solar tracker. Secondly, fluctuating wind loads provoke resonance effects on the structure of the solar tracker causing also a structural instability leading the structures to a quicker collapse.

With the purpose of reducing the effect of resonance and dynamic loads provoked by the wind, several solutions have been proposed.

One of the solutions is to reduce the length of the solar tracker, leading to a reduced number of solar panels exposed to wind action and, therefore, the torsion moment which the structure of the solar tracker has to withstand.

Currently, trackers support 45 panels with one single reducer gearbox, the gearbox being intended for two main functions:
- Acting as an embedment, i.e. restricting the rotation degree of freedom and, therefore, absorbing all the torsion moment that the wind produces on the structure.
- Providing motion to the structure for sun-tracking.

Document US 2017/0353146 A1 (SunDrive Technologies, LLC) discloses modular tracker systems according to the preamble of the independent claim below.

### Summarized description of the invention

The present invention relates to a solar tracker for providing sun tracking to a module of solar panels, the solar panel comprising more than one gearbox for each single motor, as will be explained below.

Through inclusion of several gear boxes in one same tracker, a longer solar tracker structure, with reduced wind torsion, is achieved. In particular, rotation due to the effect of wind loads is reduced in an intermediate portion of the tracker, located between gearboxes, wherein at both ends of each central portion each gearbox constitutes an embedment, so that rotation caused by the wind loads is not permitted at the positions where the gearboxes are located, the gearboxes thereby absorbing all the torsion moment caused by the wind loads. Furthermore, since rotation, due to the wind loads, is zero at the location of the gearboxes, the solar tracker is allowed to further include outer portions starting each at a gearbox and extending to a corresponding free end, wherein the rotation induced by the wind loads is reduced in the outer portions. As a consequence, longer solar trackers are obtained with reduced rotation induced by wind loads, as well as the performance of the motion transmission is notably improved, with respect to trackers based on a gearwheel and worm gear transmission.

Some commercial examples of suitable gearboxes are listed below.
- Armonic Nidec Shimpo Flexwave WP series and ER-P series.
- Neugart epyciclyc gearbox
- Coaxial coaxial gearbox

### Brief description of the drawings

The advantages mentioned above, as well as other advantages and features of the present invention, shall be better understood with reference to the following detailed description of a preferred embodiment of the invention, with due regard to the attached set of figures, which are to be construed in an illustrative, non-limitative manner, and wherein:
Figure 1 shows a view of a solar tracker according to the state of the art, wherein said solar tracker has been reduced in length so as to support 30 panels instead of 45 panels.
Figure 2 shows a view of a 60-panel solar tracker exemplifying the solar tracker of the present invention.
Figure 3 shows an enlarged view of the motor, the first gearbox and the primary shaft, in a preferred embodiment in which the motor shaft passes through the first gearbox and is connected at a free end thereof to the primary shaft.
Figure 4 shows an enlarged view illustrating leaning supports located along the primary shaft and the torsion tube.
Figure 5 shows an enlarged view of the leaning supports located at the connections of the tube portions making up the torsion tube.
Figure 6 shows an enlarged view of the second gearbox and the primary shaft.

### Detailed description of a preferred embodiment of the invention

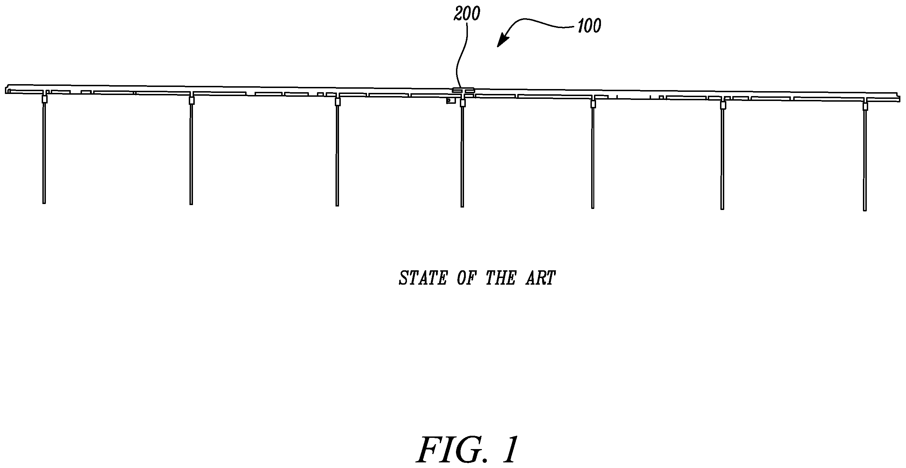

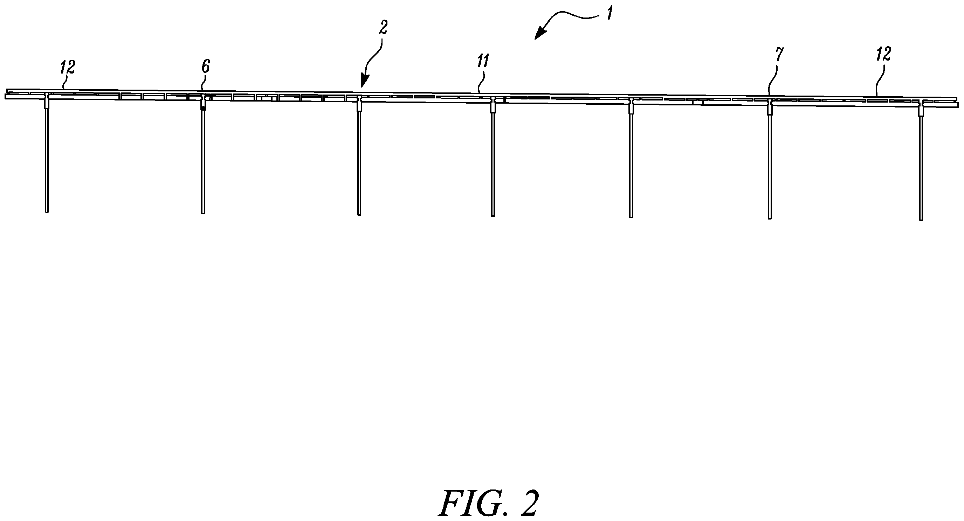

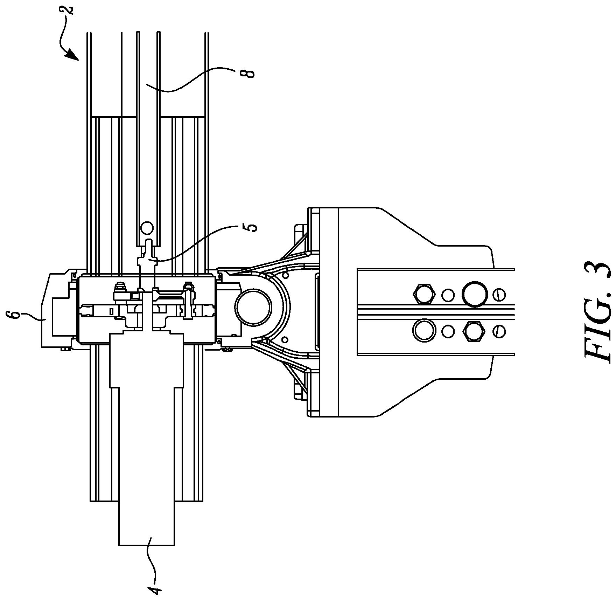

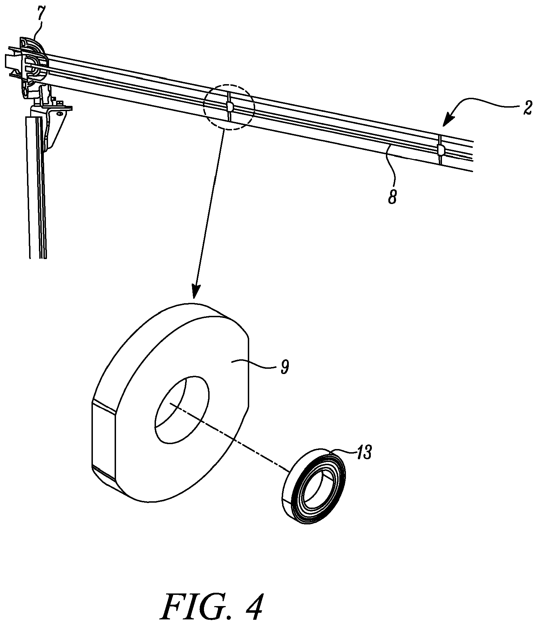

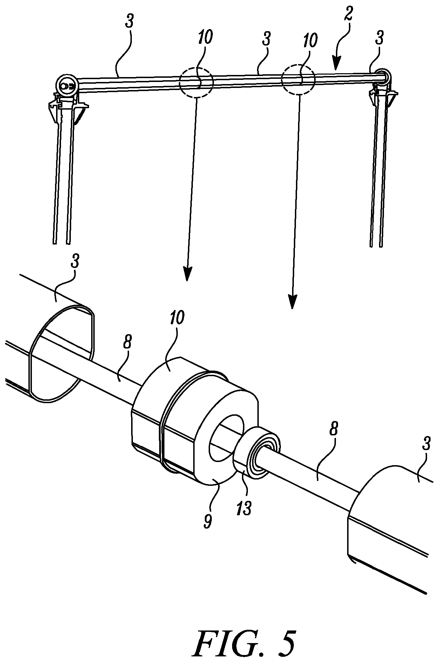

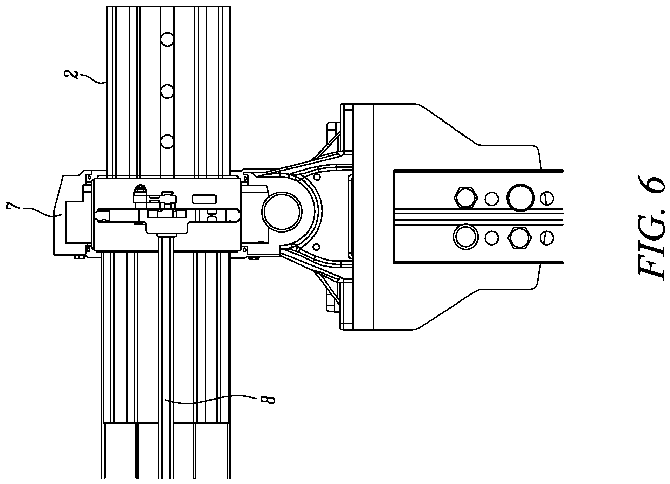

Next a detailed description of a preferred embodiment of the solar tracker (1) of the invention shall be provided, with the help of figures 1-6 mentioned above.

The solar tracker (1) comprises a torsion beam (2), for providing sun-tracking rotation to a module of solar panels (not shown). The torsion beam (2) is configured so as to define a longitudinal direction around which the torsion beam (2) is to be rotated. The torsion beam (2) is a torsion tube (2), in particular of the type made by several tube portions (3) which are adjacently connected. The solar tracker (1) also includes a motor (4), such as an electric motor (4), which comprises a rotatable motor shaft (5), which is oriented along the longitudinal direction of rotation. As explained below, the solar tracker (1) further comprises at least a first gearbox (6) and a second gearbox (7).

The first gearbox (6) is mounted to the torsion beam (2) at a first position nearer the motor (4), and connected to the motor shaft (5) for transmitting to the torsion beam (2) the rotation of the motor shaft (5), whereas the second gearbox (7) is mounted to the torsion beam (2) at a second position which is, along the longitudinal direction, further from the motor (4) than the first position.

The solar tracker (1) further comprises a primary shaft (8), coaxial to the motor shaft (5), and connected to the second gearbox (7) for transmitting to the second gearbox (7) the rotation of the motor shaft (5).

The first gearbox (6) and the second gearbox (7) are configured and mounted so as to define corresponding embedments withstanding torsion moment caused by wind loads for restricting rotation of the torsion beam (2) at their corresponding positions due to the wind loads.

The primary shaft (8) is also connected to the motor shaft (5) for transmitting the rotation of the motor shaft (5) to the second gearbox (7). Therefore, the rotation of the motor shaft (5) is transmitted both to the first gearbox (6) as well as to the primary shaft (8) which is connected to the second gearbox (7). Both gearboxes (6, 7) are preferably identical. Two possibilities are considered for transmitting the rotation from the motor shaft (5) to the primary shaft (8).
- The motor shaft (5) is passing through the first gearbox (6) and on the other side is connected to the primary shaft (8).
- An additional connection part (not shown) connects the first gearbox (6) to the primary shaft (8) maintaining the same rotation speed than the motor shaft (5). So as to make the primary shaft (8) rotate at the same speed as the motor shaft (5), the additional connection, may be any conventional means, such as a cotter and cotter pin mechanism, connecting an input shaft (not shown) of the first gearbox (6) to the primary shaft (8).

Along the primary shaft (8), leaning supports (9), for example, with bearings (13) and / or bushings (not shown) may be located for supporting the primary shaft (8), thereby providing correct alignment to the primary shaft (8). In the case that, as explained above, the torsion beam (2) comprises a torsion tube (2) made up of a plurality of coaxial tube portions (3) adjacently connected, the leaning supports (9) may be located also at connections (10) between any two adjacent tube portions (3).

The motor (4) is housed within the torsion beam (2). The primary shaft (8) is preferably housed within the torsion beam (2). The inclusion of any such elements within the torsion beam (2) reduces, even avoids, interferences with other elements of the solar tracker (1). The gearboxes (6, 7) are connected to the torsion beam (2).

The motor (4) and the first gearbox (6) are preferably integrated making part of one gearmotor system.

It has been tested that, with respect to one current 45-panel solar tracker (100) according to the state of the art, as shown on figure 1, a length reduction of 30% has led, under torsion caused by wind loads, to a reduction of 40% in torsion moment and 55% in rotation at the free ends. As a conclusion, by reducing in approximately one third the length of the solar tracker (100), an improved structural behavior under dynamic wind actions is obtained, which leads to the possibility of, starting with the above referred 45-panel solar tracker (100), producing 30-panel solar trackers with one single gearbox (200). One step forward led to defining the 60-panel solar tracker (1) according to the invention, by considering two gearboxes (6, 7) for one same motor (4), thereby providing the same effect or reducing the effects of wind loads than two 30-panel trackers (100), so that all advantages obtained through such a 30-panel solar tracker (100) configuration are kept for a 60-panel solar tracker (1), the main advantage being an economic saving. The 60-panel solar tracker (1) exemplified by the invention comprises a 30-panel intermediate portion (11), located between the first gearbox (6) and the second gearbox (7), and two 15-panel outer portions (12) starting from each corresponding gearbox (6, 7) and extending up to the corresponding free ends (13).

## Claims

1. Solar tracker (1) for providing sun tracking to a module of solar panels, the solar tracker (1) comprising:
- a hollow torsion tube (2), for providing rotation to the module of solar panels, the torsion tube (2) defining a longitudinal direction of rotation;
- a motor (4), with a rotatable motor shaft (5) along the longitudinal direction;
- a first gearbox (6), mounted to the torsion tube (2) at a first position nearer the motor (4), and connected to the motor shaft (5) for transmitting to the torsion tube (2) the rotation of the motor shaft (5);
- a second gearbox (7), mounted to the torsion tube (2) at a second position which is, along the longitudinal direction, further from the motor (4) than the first position; and
- a primary shaft (8), coaxial to the motor shaft (5), and connected to the second gearbox (7), for transmitting to the second gearbox (7) the rotation of the motor shaft (5);
wherein the first gearbox (6) and the second gearbox (7) are configured and mounted so as to define corresponding embedments withstanding torsion moment;
the solar tracker (1) being **characterized in that** the motor (4) is housed within the torsion tube (2).

2. Solar tracker (1) according to claim 1, wherein the primary shaft (8) is connected to the motor shaft (5), which is passing through the first gearbox (6).

3. Solar tracker (1), according to claim 1, further comprising an additional connection part connected to an input shaft of the first gearbox (6) and to the primary shaft (8) for maintaining in the primary shaft (8) the same rotation speed than in the motor shaft (5).

4. Solar tracker (1) according to anyone of claims 1-3, further comprising leaning supports (9) along the primary shaft (8) for supporting and aligning the primary shaft (8).

5. Solar tracker (1) according to anyone of claims 1-4, wherein the torsion tube (2) is made of a plurality of coaxial tube portions (3) adjacently connected at connections (10).

6. Solar tracker (1) according to claims 4 and 5, wherein the leaning supports (9) are located at the connections (10) of the tube portions (3).

7. Solar tracker (1) according to anyone of claims 1-6, wherein the first gearbox (6) is connected to the torsion tube (2).

8. Solar tracker (1) according to anyone of claims 1-7, wherein the motor (4) and the first gearbox (6) are integrated making part of a gearmotor system.

9. Solar tracker (1) according to anyone of claims 1-8, wherein the second gearbox (7) is connected to the torsion tube (2).

10. Solar tracker (1) according to anyone of claims 1-9, wherein the primary shaft (8) is housed within the torsion tube (2).

## Patentansprüche

1. Solartracker (1) zum Bereitstellen von Sonnennachführung für ein Modul aus Sonnenkollektoren, wobei der Solartracker (1) umfasst:
- ein hohles Torsionsrohr (2), zum Bereitstellen von Drehung für das Modul aus Sonnenkollektoren, wobei das Torsionsrohr (2) eine Längsdrehrichtung definiert;
- einen Motor (4) mit einer entlang der Längsrichtung drehbaren Motorwelle (5);
- ein erstes Getriebe (6), das an dem Torsionsrohr (2) in einer ersten, dem Motor (4) näheren Position angebracht und mit der Motorwelle (5) verbunden ist, um die Drehung der Motorwelle (5) auf das Torsionsrohr (2) zu übertragen;
- ein zweites Getriebe (7), das an dem Torsionsrohr (2) in einer zweiten Position angebracht ist, die entlang der Längsrichtung weiter von dem Motor (4) entfernt ist als die erste Position; und
- eine Antriebswelle (8), koaxial zur Motorwelle (5) und mit dem zweiten Getriebe (7) verbunden, um die Drehung der Motorwelle (5) auf das zweite Getriebe (7) zu übertragen;
wobei das erste Getriebe (6) und das zweite Getriebe (7) so konfiguriert und montiert sind, dass sie entsprechende Einbettungen definieren, die einem Torsionsmoment widerstehen;
wobei der Solartracker (1) **dadurch gekennzeichnet ist, dass** der Motor (4) innerhalb des Torsionsrohrs (2) untergebracht ist.

2. Solartracker (1) nach Anspruch 1, wobei die Antriebswelle (8) mit der Motorwelle (5) verbunden ist, die durch das erste Getriebe (6) läuft.

3. Solartracker (1) nach Anspruch 1, ferner umfassend ein zusätzliches Verbindungsteil, das mit einer Eingangswelle des ersten Getriebes (6) und mit der Antriebswelle (8) verbunden ist, um in der Antriebswelle (8) dieselbe Drehzahl wie in der Motorwelle (5) beizubehalten.

4. Solartracker (1) nach einem der Ansprüche 1-3, ferner umfassend Schrägstützen (9) entlang der Antriebswelle (8) zum Stützen und Ausrichten der Antriebswelle (8).

5. Solartracker (1) nach einem der Ansprüche 1-4, wobei das Torsionsrohr (2) aus einer Vielzahl von koaxialen Rohrabschnitten (3) besteht, die an Anschlüssen (10) nebeneinander verbunden sind.

6. Solartracker (1) nach Ansprüchen 4 und 5, wobei die Schrägstützen (9) sich an den Anschlüssen (10) der Rohrabschnitte (3) befinden.

7. Solartracker (1) nach einem der Ansprüche 1-6, wobei das erste Getriebe (6) mit dem Torsionsrohr (2) verbunden ist.

8. Solartracker (1) nach einem der Ansprüche 1-7, wobei der Motor (4) und das erste Getriebe (6) als Teil eines Getriebemotorsystems integriert sind.

9. Solartracker (1) nach einem der Ansprüche 1-8, wobei das zweite Getriebe (7) mit dem Torsionsrohr (2) verbunden ist.

10. Solartracker (1) nach einem der Ansprüche 1-9, wobei die Antriebswelle (8) innerhalb des Torsionsrohrs (2) untergebracht ist.

## Revendications

1. Suiveur solaire (1) pour fournir un suivi solaire à un module de panneaux solaires, le suiveur solaire (1) comprenant :
- un tube de torsion creux (2), pour fournir une rotation au module de panneaux solaires, le tube de torsion (2) définissant une direction longitudinale de rotation ;
- un moteur (4), avec un arbre moteur rotatif (5) le long de la direction longitudinale ;
- une première boîte de vitesses (6), montée sur le tube de torsion (2) à une première position plus proche du moteur (4), et reliée à l'arbre moteur (5) pour transmettre au tube de torsion (2) la rotation de l'arbre moteur (5) ;
- une seconde boîte de vitesses (7), montée sur le tube de torsion (2) à une seconde position qui est, le long de la direction longitudinale, plus loin du moteur (4) que la première position ; et
- un arbre primaire (8), coaxial à l'arbre moteur (5), et relié à la seconde boîte de vitesses (7), pour transmettre à la seconde boîte de vitesses (7) la rotation de l'arbre moteur (5) ;
dans lequel la première boîte de vitesses (6) et la seconde boîte de vitesses (7) sont conçues et montées de manière à définir des encastrements correspondants résistant au moment de torsion ;
le suiveur solaire (1) étant **caractérisé en ce que** le moteur (4) est logé à l'intérieur du tube de torsion (2).

2. Suiveur solaire (1) selon la revendication 1, dans lequel l'arbre primaire (8) est relié à l'arbre moteur (5), qui traverse la première boîte de vitesses (6).

3. Suiveur solaire (1), selon la revendication 1, comprenant en outre une pièce de connexion supplémentaire reliée à un arbre d'entrée de la première boîte de vitesses (6) et à l'arbre primaire (8) pour maintenir dans l'arbre primaire (8) la même vitesse de rotation que dans l'arbre moteur (5).

4. Suiveur solaire (1) selon l'une quelconque des revendications 1 à 3, comprenant en outre des supports d'appui (9) le long de l'arbre primaire (8) pour supporter et aligner l'arbre primaire (8).

5. Suiveur solaire (1) selon l'une quelconque des revendications 1 à 4, dans lequel le tube de torsion (2) est constitué d'une pluralité de portions de tube coaxiales (3) reliées de manière adjacente au niveau de liaisons (10).

6. Suiveur solaire (1) selon les revendications 4 et 5, dans lequel les supports d'appui (9) sont situés au niveau des liaisons (10) des portions de tube (3).

7. Suiveur solaire (1) selon l'une quelconque des revendications 1 à 6, dans lequel la première boîte de vitesses (6) est reliée au tube de torsion (2).

8. Suiveur solaire (1) selon l'une quelconque des revendications 1 à 7, dans lequel le moteur (4) et la première boîte de vitesses (6) sont intégrés formant une partie d'un système de motoréducteur.

9. Suiveur solaire (1) selon l'une quelconque des revendications 1 à 8, dans lequel la seconde boîte de vitesses (7) est reliée au tube de torsion (2).

10. Suiveur solaire (1) selon l'une quelconque des revendications 1 à 9, dans lequel l'arbre primaire (8) est logé à l'intérieur du tube de torsion (2).
